# EUROPEAN PATENT APPLICATION

(11) **EP 4 438 395 A1**
(43) Date of publication of application: **02.10.2024**
(21) Application number: 24164775.9
(22) Date of filing: 20.03.2024
(51) Int. Cl.: B60L 58/26, H01M 50/141, H01M 10/613, H01M 10/625, H01M 10/633, H01M 10/663, B60H 1/00, B60H 3/02, B60H 1/32, B60L 50/64

(54) **BATTERY ASSEMBLY FOR A MOTOR VEHICLE AND MOTOR VEHICLE COMPRISING THE SAME**

(30) Priority: 21.03.2023 IT 202300005259; 21.04.2023 IT 202300007914
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

A battery assembly (10; 10') for a motor vehicle (1) is described, the former comprising a case (11) defining an inner volume (12a, 12b), which is fluidly isolated from the external atmospheric air; a plurality of batteries (13) arranged in the inner volume (12a, 12b); a heat exchanger (14) adapted to condense the humidity of the air contained in the inner volume (12a, 12b); a tank (15) adapted to contain the water condensed by the heat exchanger (14); and an opening (71) fluidly connected to said tank (15) and adapted to allow said condensed water to flow out of said inner volume (12a, 12b).

## Description

### CROSS-REFERENCE TO RELATED APPLICATIONS

This patent application claims priority from Italian patent applications no. 102023000005259 filed on March 21, 2023, and no. 102023000007914 filed on April 21, 2023, the entire disclosure of which is incorporated herein by reference.

### TECHNICAL FIELD

The present invention relates to a battery assembly for a motor vehicle and a motor vehicle comprising a battery assembly.

### BACKGROUND

As is known, electric or hybrid traction cars essentially comprise:
- a frame;
- a plurality of wheels, which can rotate in relation to the frame around respective rotation axes and are adapted to move the frame in relation to the ground on which they rest;
- one or more electric motors adapted to cause the wheels to rotate around the respective axes;
- one or more batteries electrically connected to the electric motors and housed within a suitable container.

Cars comprising battery temperature control systems are also well known. In fact, batteries operating at temperatures close to or below ambient temperature are characterized by higher efficiencies than batteries operating at higher temperatures. This allows the portion of the vehicle's weight that is used to store electrical energy to be reduced.

However, it was found that the humidity of the air naturally present in the battery container tends to condense as the temperature of the batteries decreases. In particular, the inner walls of the container act as condensation plates for the humidity, which, once liquefied, tends to accumulate at the bottom of the container.

Since the overall size of the battery container in electric or hybrid vehicles may be very large, the amount of condensation that forms in the container risks causing short circuits.

In the light of the above, there is a need to improve known motor vehicles in order to limit the risk of short circuits due to condensation that forms in the battery containers.

The object of the invention is to meet the above need, preferably in a simple and reliable way.

### DESCRIPTION OF THE INVENTION

The object is achieved by means of a battery assembly for a motor vehicle as defined in claim 1.

The dependent claims define particular embodiments of the invention.

### BRIEF DESCRIPTION OF THE DRAWINGS

To better understand the invention, two embodiments thereof are described hereinafter by way of non-limiting examples and with reference to the accompanying drawings, wherein:
- Figure 1 is a schematic side view of a motor vehicle comprising a battery assembly according to a first embodiment of the present invention and with parts removed for clarity;
- Figure 2 is a perspective view of the battery assembly in Figure 1;
- Figure 3 is a perspective view of the battery assembly in Figures 1 and 2, with parts removed for clarity;
- Figure 4 is a perspective view of a portion of the battery assembly in Figures 1 to 3 on an enlarged scale and with parts removed for clarity;
- Figure 5 is a partial view of a component of the battery assembly in Figures 1 to 4, with parts removed for clarity;
- Figure 6 is a schematic representation of the battery assembly in Figures 1 to 5;
- Figure 7 is a schematic representation of the battery assembly according to a second embodiment of the present invention; and
- Figure 8 is a cross-section of the battery assembly along the plane VIII-VIII in Figure 2 and with parts removed for clarity.

### EMBODIMENTS OF THE INVENTION

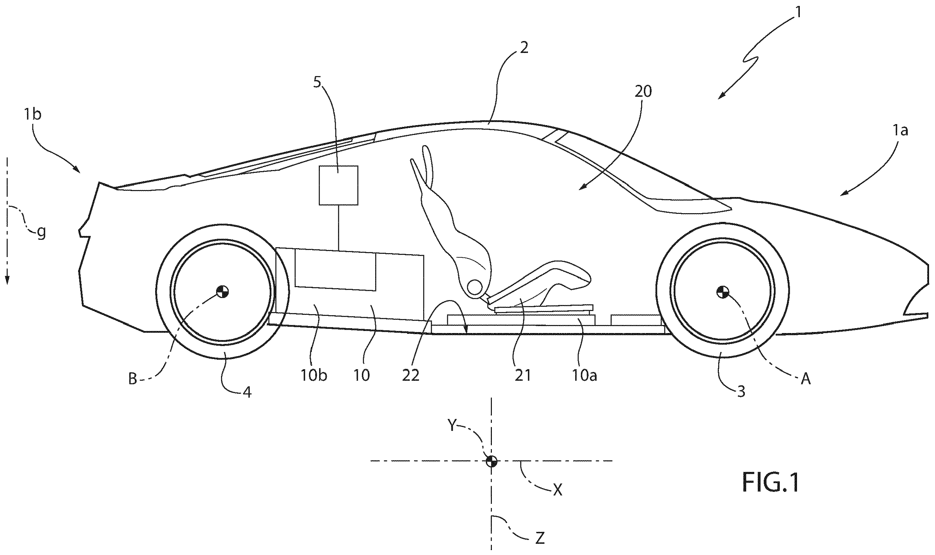

In Figure 1, reference number 1 is used to indicate, as a whole, an electric or hybrid motor vehicle comprising:
- a frame 2;
- a plurality of wheels 3, 4, which can rotate around respective rotation axes A, B in relation to the frame 2;
- one or more electric motors 5 - only schematically shown - adapted to cause the wheels 3, 4 to rotate around the respective axes A, B; and
- a battery assembly 10.

The vehicle 1 defines a front portion 1a and a rear portion 1b opposite each other along a longitudinal direction X of the vehicle. It is therefore possible to identify a pair of front wheels 3 arranged in the front portion 1a and a pair of rear wheels 4 arranged in the rear portion 1b.

The vehicle 1 may include an internal combustion engine and/or fuel cells. In addition, the vehicle 1 is preferably a sports car.

The frame 2, in turn, defines a passenger compartment 20 adapted to accommodate the driver and any passengers and comprising one or more seats 21. In the case shown herein, the vehicle 1 comprises only one pair of seats 21 (Figure 1) .

The frame 2 also comprises a bottom 22, which is the closest portion of the frame 2 to the ground along a direction Z orthogonal to the longitudinal direction X and the ground (Figure 1). It is also possible to define a direction Y orthogonal to the directions X and Z.

The battery assembly 10, in turn, comprises a case 11 defining an inner volume 12a, 12b and a plurality of batteries 13 arranged in the inner volume 12a, 12b and electrically connected to the electric motors 5.

In the case shown herein, the battery assembly 10 comprises a front assembly 10a and a rear assembly 10b opposite each other along the longitudinal direction X. In detail, the extension of the front assembly 10a along the direction Z is less than the extension of the rear assembly 10b along the same direction Z.

The battery assembly 10 is interposed between the front wheels 3 and the rear wheels 4 along the longitudinal direction X. In greater detail, the front assembly 10a is arranged immediately underneath the seats 21 along the direction Z and the rear assembly 10b is arranged behind the seats 21 along the longitudinal direction X (Figure 1).

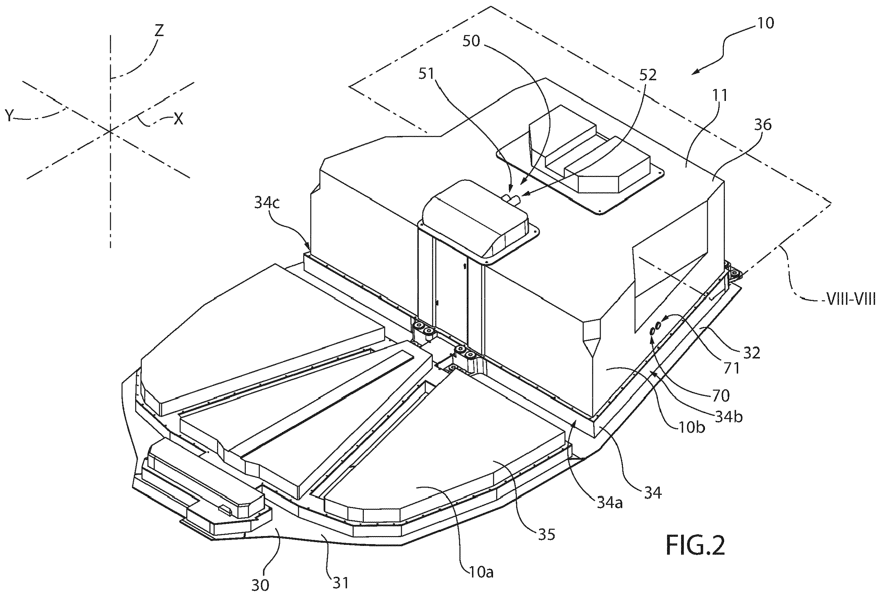

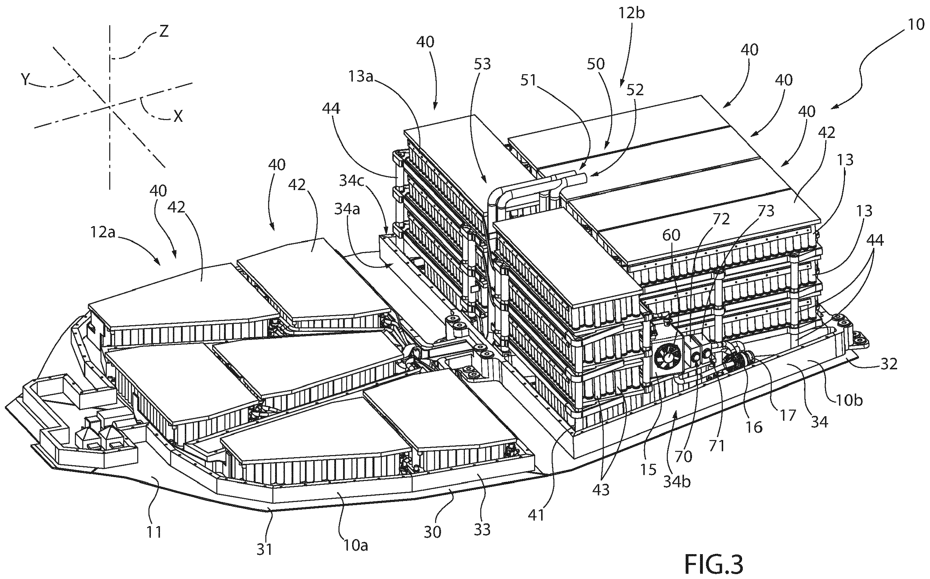

As shown in Figures 2 and 3, the front and rear assemblies 10a, 10b are mechanically connected to each other. Specifically, the case 11 comprises:
- a base body 30 to/into which the front and rear assemblies 10a, 10b are fixed or integrated and which is fixed to the bottom 22;
- a cover 35, which couples to the base body 30 and covers the batteries 13 of the front assembly 10a; and
- a cover 36, which couples to the base body 30 and covers the batteries 13 of the rear assembly 10b.

It should be noted that the inner volume 12a is the volume enclosed by the base body 30 and the cover 35 and that the inner volume 12b is the volume enclosed by the base body 30 and the cover 36. In the case shown herein, the inner volumes 12a and 12b are fluidly isolated from each other. However, the inner volumes 12a and 12b may be fluidly connected to each other.

The base body 30, in turn, comprises:
- a plate 31, at the front assembly 10a; and
- a plate 32, at the rear assembly 10b and which is joined to or integrated into the plate 31 (Figure 2).

The front and rear assemblies 10a, 10b are arranged at an angle to each other (Figure 1). In detail, the plate 31 is parallel or substantially parallel to the ground, and the plate 32 is inclined relative to the ground and the plate 31. In further detail, proceeding along the longitudinal direction X in the direction oriented from the front portion 1a to the rear portion 1b, the distance between the rear assembly 10b and the ground along the direction Z increases progressively. In other words, the plate 32 is inclined relative to the gravity acceleration vector g, i.e., it is not parallel and not perpendicular thereto when the motor vehicle 1 is in a normal operating position with the wheels 3 and 4 in contact with the ground. The rear assembly 10b is inclined at an angle less than 10° - preferably between 3° and 5° - relative to the front assembly 10a.

As shown in Figure 3, the front assembly 10a and the rear assembly 10b each comprise a plurality of batteries 13 placed side by side and grouped into modules 40. Preferably, the batteries 13 are equal to each other and have a cylindrical shape.

Each module 40 comprises a base plate 41 and a plate 42 opposite the plate 41 along the direction Z, between which the batteries 13 belonging to the same module are interposed. In addition, the batteries 13 of each module 40 are directed parallel or substantially parallel to the direction Z. Furthermore, each module 40 may include a plurality of columns 43 which are also interposed between the plate 41 and the relevant plate 42. The assembly of plates 41, 42 and columns 43 - where present - is adapted to support the batteries 13 and to hold them still in relation to each other.

In the case shown herein, the plates 41, 42 of the modules 40 of the front assembly 10a are trapezoidal or substantially trapezoidal in shape; the plates 41, 42 of the modules 40 of the rear assembly 10b are rectangular in shape and are all equal to each other.

The front assembly 10a comprises a single layer of modules 40 coplanar with each other and fixed to the plate 31. The rear assembly 10b comprises a plurality of layers of modules 40 stacked on each other parallel to the direction Z. In particular, in the rear assembly 10b, the plate 42 of each module 40 acts as the base plate 41 of the respective module 40 arranged immediately above along the direction Z.

Preferably, the arrangement of the batteries 13 in the battery assembly 10 is symmetrical relative to a median plane of the battery assembly 10 parallel to the directions X and Z.

In greater detail, the base body 30 further comprises (Figure 3):
- a border 33 extending parallel to the direction Z at the plate 31 and surrounding the batteries 13 of the front assembly 10a; and
- a border 34 extending parallel to the direction Z at the plate 32 and surrounding the batteries 13 of the rear assembly 10b.

The cover 35 can be coupled to the border 33 and the cover 36 can be coupled to the border 34.

The battery assembly 10 may also include one or more power electronic devices (e.g., inverters, choppers, switching devices) housed in the inner volume 12a, 12b.

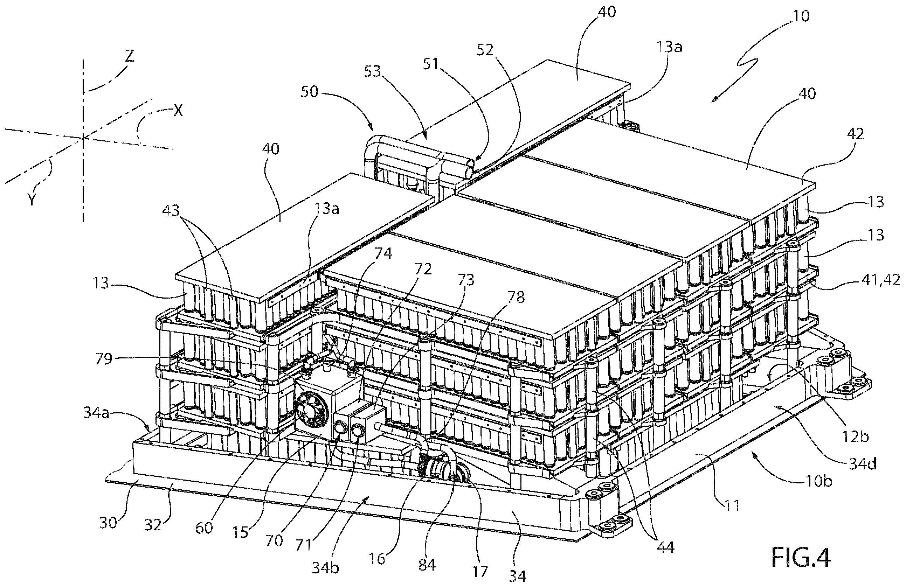

The batteries 13 are electrically connected to each other by means of electrical connection elements 13a (Figures 3 and 4). In the case shown herein, the electrical connection elements 13a are metal bars, e.g., copper bars.

The vehicle 1 comprises a cooling system 50 - shown only partially in Figure 2 - adapted to limit the temperature of the batteries 13. The temperature of the batteries 13 means the temperature measured at or near the outer surface of the batteries or in the inner volume 12a, 12b in general.

The cooling system 50 comprises a circuit, through which a coolant, e.g., of the freon type, is made to flow, and a circulation pump for the coolant, which is known per se and therefore not illustrated. The circuit, in turn, comprises:
- an inlet opening 51 adapted to allow the coolant to enter the inner volume 12a, 12b;
- an outlet opening 52 adapted to allow the coolant to flow out of the inner volume 12a, 12b; and
- a fluidic path 53 fluidly interposed between the inlet opening 51 and the outlet opening 52 and extending within the battery assembly 10.

The fluidic path 53 comprises at least some of the plates 41 and 42, which are hollow and suitable for the coolant to pass through, and a plurality of ducts which put the openings 51, 52 in fluid communication with the plates 41, 42, and the plates 41, 42 in fluid communication with each other. In greater detail, the plates 41 and 42 of each module 40 of the rear assembly 10b are fluidly connected to each other by means of tubular elements 44 extending between the plate 41 and the related plate 42 and directed parallel or substantially parallel to the batteries 13. Preferably, the tubular elements 44 of each module 40 are lined up and in fluid communication with the tubular elements 44 of the adjacent modules 40 parallel to the direction Z (Figures 3 and 4).

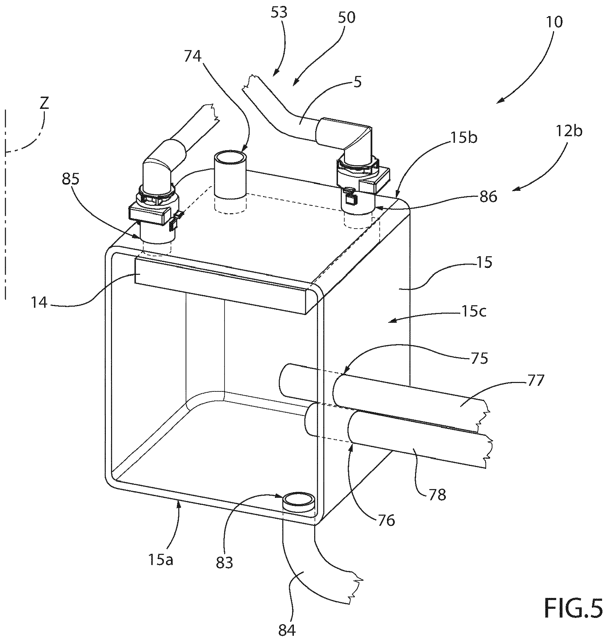

Advantageously, the battery assembly 10 comprises (Figures 4 and 5):
- a heat exchanger 14 adapted to condense the humidity in the air contained in the inner volume 12b;
- a tank 15 adapted to contain the water condensed by the heat exchanger 14;
- an opening 71 fluidly connected to the tank 15 and adapted to allow the condensed water to flow out of the inner volume 12b.

The heat exchanger 14 and the tank 15 define an active dehumidification system of the battery assembly 10.

In addition, since within the inner volume 12b heat exchange occurs between the batteries 13 and the fluid flowing through the cooling system 50 and between the air contained in the inner volume 12b and the heat exchanger 14, the inner volume 12b defines a heat exchange portion of the battery assembly 10. Therefore, the battery assembly 10 as a whole constitutes a heat exchange device of the vehicle 1.

Although in the embodiment shown the battery assembly 10 comprises only one dehumidification system for dehumidifying the inner volume 12b, the battery assembly 10 may comprise - as a replacement or in addition - a dehumidification system for dehumidifying the inner volume 12a. For the sake of brevity, only the dehumidification system for the inner volume 12b will be referred to below, as the considerations for this also apply to the other one.

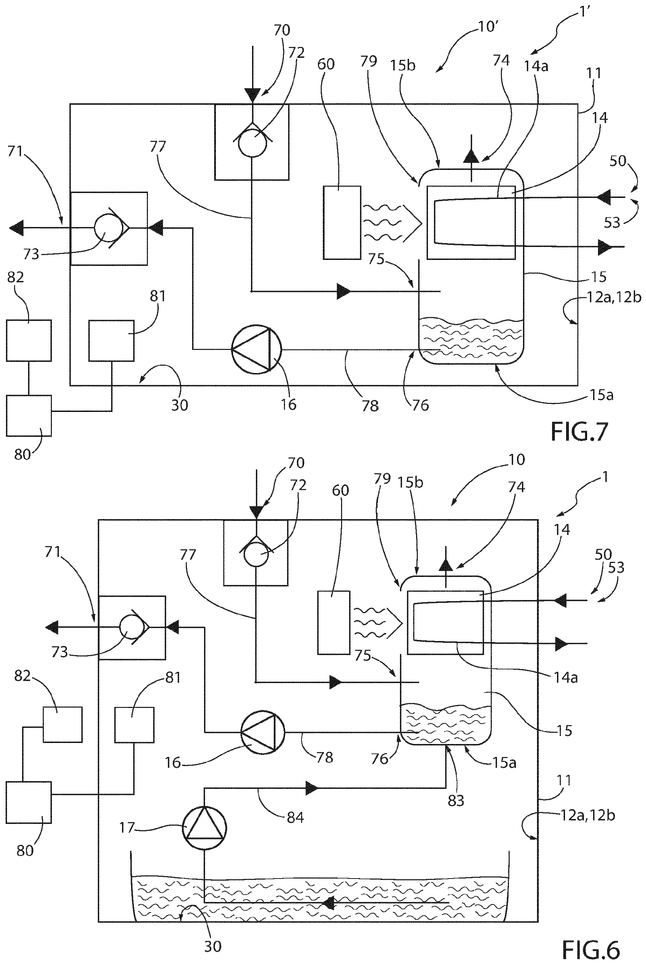

As shown in Figures 4 and 6, the battery assembly 10 further comprises:
- an opening 70 adapted to allow external atmospheric air to enter the inner volume 12b;
- valve means 72 adapted to selectively obstruct the opening 70;
- valve means 73 adapted to selectively obstruct the opening 71; and
- a pump 16 adapted to expel the water contained in the tank 15 out of the inner volume 12b.

The battery assembly 10 also includes an electronic control unit 80 operatively connected to the pump 16.

External atmospheric air means the air outside the inner volume 12b. In particular, the external atmospheric air could be inside the motor vehicle 1 or come directly from outside the motor vehicle 1.

The openings 70 and 71 are obtained through the case 11. In addition, when the valve means 72 occlude the opening 70, the inner volume 12b is fluidly isolated from the external atmospheric air.

In greater detail, the valve means 72 and 73 comprise respective electromechanical check valves. The check valve of the valve means 72 prevents the flow of air from the tank 15 to the opening 70; the check valve of the valve means 73 prevents the flow of water from the opening 71 to the tank 15.

The tank 15 is fully contained within the inner volume 12b and comprises an opening 74 and an opening 79, which place it in fluid communication therewith.

In the case shown herein, the tank 15 has a parallelepiped shape and comprises (Figure 5):
- a base wall 15a;
- a wall 15b opposite the base wall 15a along the direction Z; and
- a plurality of side walls 15c interposed between the base wall 15a and the wall 15b along the direction Z. Preferably, the opening 74 is obtained through the wall 15b and/or the opening 79 is obtained through one of the side walls 15c.

In detail, the openings 70 and 71 are directly fluidly connected to the tank 15. In greater detail, the tank 15 comprises an opening 75 and an opening 76, and the battery assembly 10 comprises a duct 77, which fluidly connects the opening 70 to the opening 75, and a duct 78, which fluidly connects the opening 71 to the opening 76.

As shown in Figure 6, the valve means 72 are fluidly interposed between the opening 70 and the tank 15. In particular, the valve means 72 are arranged at the duct 77. Similarly, the valve means 73 are fluidly interposed between the tank 15 and the opening 71. In particular, the valve means 73 are arranged at the duct 78. Moreover, the pump 16 is fluidly interposed between the tank 15 and the valve means 73 along the duct 78.

It should be specified that the batteries 13 of the battery assembly 10 are located outside the tank 15. Therefore, the tank 15 does not comprise and/or contain batteries 13.

The heat exchanger 14 is adapted to remove heat from the air inside the tank 15, thereby causing the condensation of the humidity contained therein. The heat exchanger 14 is known to comprise a duct 14a (e.g., in the form of a coil), which is adapted, on the inside, for flow-through of a coolant and, on the outside, of being lapped by the air contained in the tank 15. The difference between the average temperature of the air contained in the tank 15 and the temperature of the outer surface of the duct 14a causes condensation droplets to form on the outer surface of the duct 14a.

The heat exchanger 14 is fully housed inside the tank 15. Furthermore, the tank 15 is adapted to convey and contain the water obtained by condensation by the heat exchanger 14. Specifically, the base wall 15a is adapted to collect the condensation droplets formed on the outer surface of the duct 14a and fallen from the aforementioned outer surface by gravity. In addition, the opening 74 is adapted to allow dry air, i.e., air at least partially deprived of its humidity by the heat exchanger 14, to flow from the tank 15 to the rest of the inner volume 12b.

The heat exchanger 14 is spaced apart from the base wall 15a parallel to the direction Z. Preferably, the heat exchanger 14 is closer to the wall 15b than to the wall 15a along the direction Z (Figure 5).

Preferably, the heat exchanger 14 is an evaporator of the cooling system 50. In detail, the heat exchanger 14 is run through by the same coolant that cools the batteries 13, and the duct 14a is part of the fluidic path 53. In addition, when running through the heat exchanger 14, the coolant absorbs heat from the air contained in the tank 15 and preferably passes from the liquid state to the gaseous state.

As shown in Figure 5, the tank 15 comprises two further openings 85 and 86 run through by two respective pipes of the fluidic path 53, which enter and exit the heat exchanger 14, respectively. In detail, the openings 85 and 86 are obtained through the wall 15b.

The motor vehicle 1 also comprises an HVAC system for the heating, ventilation, and air conditioning of the motor vehicle itself, which is not described in detail as it is known per se. For example, the HVAC system comprises an air conditioner for the passenger compartment 20.

Preferably, the HVAC system includes the cooling system 50. Therefore, during the operation of the motor vehicle 1, the same coolant flows through the heat exchanger 14, cools the batteries 13 and performs its heating, ventilation and/or air conditioning functions outside the battery assembly 10.

The battery assembly 10 further comprises a fan 60 adapted to increase the kinetic energy of the air contained in the inner volume 12b. In detail, the fan 60 is configured to direct the air contained in the inner volume 12b towards the tank 15.

In the embodiment shown in Figure 4, the fan 60 is positioned at the opening 79. In other words, the rotor of the fan 60 is surrounded by the surfaces of the opening 79.

The fan 60 is operatively connected to the electronic control unit 80.

The battery assembly 10 further comprises a pressure sensor 81 adapted to detect a pressure pᵢₙ of the air contained in the inner volume 12b and a pressure sensor 82 adapted to detect a pressure pₒᵤₜ of the atmospheric air external to the inner volume 12b. The pressure sensors 81 and 82 are operatively connected to the electronic control unit 80 (Figure 6).

The pressure sensor 81 is configured to send the electronic control unit 80 a signal relating to the pressure pᵢₙ, and the pressure sensor 82 is configured to send the electronic control unit 80 a signal relating to the pressure pₒᵤₜ .

Furthermore, the electronic control unit 80 is programmed to:
- compare the signal relating to the pressure pᵢₙ with the signal relating to the pressure pₒᵤₜ;
- command the valve means 72 to allow external atmospheric air to enter the inner volume 12b when the pressure pᵢₙ is less than the pressure pₒᵤₜ;
- command the valve means 73 to allow condensed water to flow out of the inner volume 12b when the pressure pᵢₙ is greater than the pressure pₒᵤₜ.

Preferably, the electronic control unit 80 is also programmed to command the valve means 72 to prevent external atmospheric air from entering the inner volume 12b when the pressure pin is greater than the pressure pₒᵤₜ.

The electronic control unit 80 can also be programmed to command the valve means 73 to allow condensed water to flow out of the inner volume 12b when the level of condensed water in the tank 15 is higher than a threshold value.

The battery assembly 10 further comprises a pump 17 adapted to suck the condensed water collected in the inner volume 12b and outside the tank 15. In detail, the pump 17 is adapted to suck the condensed water collected on the base body 30 on the side of the inner volume 12b and to cause it to be expelled through the opening 71. In further detail, the pump 17 sucks the condensed water collected from the plate 32, which is inclined relative to the gravity acceleration vector g. As shown in Figure 6, the pump 17 is fluidly connected to the tank 15. In detail, the tank 15 comprises an opening 83, and the battery assembly comprises a duct 84 that fluidly connects the pump 17 to the opening 83.

The pump 17 is operatively connected to the electronic control unit 80. Preferably, the electronic control unit 80 is programmed to activate the operation of the pump 17 when the level of condensed water collected in the inner volume 12b outside the tank 15 is higher than a threshold level and/or at regular time intervals.

The electronic control unit 80 - except when the level of condensed water in the tank 15 is higher than the threshold value - is programmed, in general, to command the valve means 73 to prevent the condensed water from flowing out of the inner volume 12b when the pressure pᵢₙ is less than the pressure pₒᵤₜ.

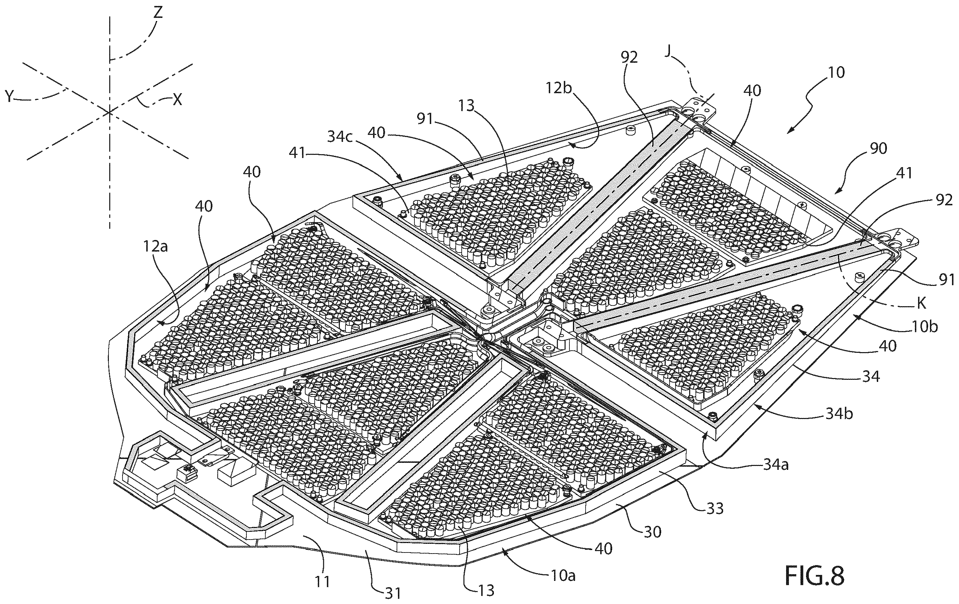

Advantageously, the battery assembly 10 comprises thermal insulation means 90 adapted to limit the transfer of heat between the heat exchange volume 12b and the case 11 and therefore between the heat exchange volume 12b and the outside of the heat exchange volume 12b (Figure 8).

In detail, the thermal insulation means 90 comprise (Figure 8):
- insulating elements 91 placed in direct contact with the case 11; and/or
- insulating elements 92 interposed between at least some of the batteries 13 within the inner volume 12b.

In further detail, the insulating elements 91 are arranged in direct contact with the border 34, preferably on the side of the inner volume 12b.

Specifically, the border 34 comprises:
- a portion 34a facing the front assembly 10a;
- a portion 34d opposite the portion 34a along the direction X; and
- two side portions 34b, 34c, extending between the portion 34a and the portion 34d along the direction X.

In the case shown herein, the thermal insulation means 90 comprise an insulating element 91 extending in contact with the portions 34a and 34b, and an insulating element 91 extending in contact with the portions 34a and 34c. Preferably, the two insulating elements 91 are L-shaped in a plane perpendicular to the direction Z.

The insulating elements 92 are interposed along the directions X and/or Y between two or more modules 40. In the embodiment shown herein, the thermal insulation means 90 comprise two insulating elements 92 arranged symmetrically in relation to the median plane of the battery assembly 10 directed parallel to the directions Z and X.

In addition, the insulating elements 92 mainly extend along respective directions J, K transversal to the direction X. The insulating elements 92 have a trapezoidal cross-section in a plane perpendicular to the respective directions J and K.

The thermal insulation means 90 are made of a thermal insulation material, e.g., rubber. Preferably, furthermore, the insulating elements 91 have a smaller thickness than the insulating elements 92 in a plane perpendicular to the direction Z.

The battery assembly 10 also comprises thermal insulation means 90 adapted to limit the transfer of heat between the heat exchange volume 12a and the case 11, similar to the thermal insulation means 90 adapted to limit the transfer of heat between the heat exchange volume 12b and the case 11.

The operation of the battery assembly 10 is described below, starting from a condition in which the pressure pᵢₙ is equal to the pressure pₒᵤₜ.

In use, the battery assembly 10 stores electrical energy and powers the electric motors 5. During its operation, the temperature of the batteries is limited by the cooling system 50.

In this condition, the air contained in the inner volume 12b reaches the tank 15 through the opening 79 and laps the duct 14a, where the water vapour of the air is condensed. The condensed water falls by gravity to the bottom of the tank 15. In detail, in the inner volume 12b, the movement of air towards the tank 15 is facilitated by the fan 60, which is controlled by the electronic control unit 80. At the same time, the valve means 72 prevent external atmospheric air from entering through the opening 70, and the inner volume 12b is fluidly isolated from the external atmospheric air.

When the level of water collected in the tank 15 is higher than the threshold value, the electronic control unit 80 commands the activation of the pump 16 and the expulsion of the condensed water through the valve means 73 and the opening 71. Similarly, when the level of water collected in the inner volume 12b outside the tank 15 is higher than the threshold value and/or at regular time intervals, the electronic control unit 80 commands the activation of the pump 17 and the transfer of the collected condensed water from the plate 32 to the tank 15.

When the pressure pᵢₙ is less than the pressure pₒᵤₜ, the electronic control unit 60 commands the valve means 72 to allow external atmospheric air to enter the inner volume 12b through the opening 70, resulting in an increase in the value of the pressure pᵢₙ. In detail, the external atmospheric air entering through the opening 70 directly reaches the tank 15 through the duct 77 and the opening 75 and is dehumidified by the heat exchanger 14.

When the pressure pᵢₙ is greater than the pressure pₒᵤₜ, the electronic control unit 60 commands the valve means 73 to allow condensed water to flow out through the opening 71, resulting in a decrease in the value of the pressure pᵢₙ. In detail, the condensed water is sucked from the tank 15 by the pump 16 and reaches the opening 71 through the duct 78.

During operation, the thermal insulation means 90 limit the transfer of heat between the heat exchange volume 12b and the case 11 and between the heat exchange volume 12a and the case 11.

With reference to Figure 7, the numeral 10' indicates a battery assembly according to a second embodiment of the invention. The battery assembly 10' is similar to the battery assembly 10 and will be described below only in so far as it differs from the latter; equal or equivalent parts of the battery assemblies 10, 10' will be identified, where possible, by the same reference numbers. The battery assembly 10' differs from the battery assembly 10 in that it does not include the additional pump 17.

The operation of the battery assembly 10' is apparent to a person skilled in the art in light of the operation of the battery assembly 10 described above and is therefore not discussed in detail for the sake of brevity.

The advantages of the battery assembly 10, 10' and the motor vehicle 1 according to the invention are clear from the foregoing.

Since the battery assembly 10, 10' comprises the heat exchanger 14, the tank 15 and the opening 71, the humidity level in the inner volume 12a, 12b can be controlled in a simple and cost-effective way. As a result, the risk of short circuits due to the formation of condensation in the inner volume 12a, 12b can be reduced.

Since the opening 70 is directly fluidly connected to the tank 15, the moisture-laden external atmospheric air is flown directly near the heat exchanger 14, where it can be immediately dehumidified. As a result, the pressure pᵢₙ can be increased, when necessary, while limiting the increase in humidity in the inner volume 12a, 12b outside the tank 15.

Since the heat exchanger 14 is arranged in the tank 15, the tank 15 can directly collect the condensation formed on the outer surface of the duct 14a and fallen by gravity.

As the tank 15 is arranged in the inner volume 12a, 12b and comprises the opening 74, the dehumidified air inside the tank 15 can be fed directly into the inner volume 12a, 12b.

Since the battery assembly 10, 10' comprises the pressure sensors 81, 82 and the electronic control unit 80, the pressure pᵢₙ in the inner volume 12a, 12b can be controlled and the pressure differences compared to the pressure pₒᵤₜ can be compensated for automatically. This is particularly advantageous, for example, when the motor vehicle 1 is at altitude.

Since the battery assembly 10, 10' includes the fan 60, it is possible to facilitate the movement of the air contained in the inner volume 12b towards the tank 15 and thus obtain its dehumidification.

As the battery assembly 10 includes the additional pump 17, the condensation collected on the case 11 and therefore outside the tank 15 can be removed from the inner volume 12b. This further averts the risk of short circuits in the battery assembly 10.

Since the plate 32 is inclined relative to the gravity acceleration vector, the pump 17 can effectively suck up the condensed water that has collected there. In fact, because of the inclination of the plate 32, the condensed water will tend to collect in a portion of the plate 32 near the front assembly 10a and will not stagnate in multiple scattered and distant portions of the plate 32. This limits the risk that the pump 17 is unable to suck all the condensed water contained in the inner volume 12b outside the tank 15.

Since the battery assembly 10, 10' includes one or more power electronic devices, the temperature, pressure, and humidity of these devices and of the batteries 13 can be controlled at the same time.

Since the battery assembly 10, 10' comprises the thermal insulation means 90, it is possible to limit the heat transfer between the inner volume 12a, 12b and the case 11. As a result, the unwanted transfer of heat between the inner volume 12a, 12b and the rest of the vehicle 1, 1' and between the inner volume 12b and the inner volume 12a is limited. This in particular allows the propagation of heat in the case of a thermal runaway condition of the batteries 13 contained in the inner volume 12b to be reduced.

Lastly, it is clear that modifications and variations may be made to the battery assembly 10, 10' and the motor vehicle 1 according to the invention, without however departing from the scope of protection defined by the claims.

According to a variant, not shown, the valve means 72 and 73 comprise respective pressure valves. According to this variant, the pressure valve of the valve means 72 is adapted to allow external atmospheric air to enter the inner volume 12a, 12b when the pressure pᵢₙ is lower than the pressure pₒᵤₜ and to prevent external atmospheric air from entering the inner volume 12a, 12b when the pressure pᵢₙ is greater than the pressure pₒᵤₜ. In addition, according to this variant, the pressure valve of the valve means 73 is adapted to allow condensed water to flow out of the inner volume 12a, 12b when the pressure pᵢₙ is greater than the pressure pₒᵤₜ and to prevent condensed water from flowing out of the inner volume 12a, 12b when the pressure pᵢₙ is lower than the pressure pₒᵤₜ.

The battery assembly 10, 10' may comprise more than one pressure sensor 81 and/or more than one pressure sensor 82.

## Claims

1. A battery assembly (10; 10') for a motor vehicle (1) comprising:
- a case (11) defining an inner volume (12a, 12b);
- a plurality of batteries (13) arranged within said inner volume (12a, 12b);
**characterized by** comprising:
- a heat exchanger (14) adapted to condense the humidity of the air contained, in use, in said inner volume (12a, 12b);
- a tank (15) adapted to contain the humidity condensed, in use, by said heat exchanger (14); and
- a first opening (71) fluidly connected to said tank (15) and adapted to allow said condensed humidity to flow, in use, out of said inner volume (12a, 12b).

2. The battery assembly according to claim 1, **characterized by** comprising:
- first valve means (73) adapted to selectively obstruct said first opening (71); said first valve means (73) being fluidly interposed between said tank (15) and said first opening (71);
- a first pump (16) adapted to expel the water contained in said tank (15) outside said inner volume (12a, 12b) through said first opening (71); said first pump (16) being fluidly interposed between said tank (15) and said first valve means (73);
- a second opening (70) adapted to allow atmospheric air external to said inner volume (12a, 12b) to enter said inner volume (12a, 12b); and
- second valve means (72) adapted to selectively obstruct said second opening (70); said second valve means (72) being fluidly interposed between said second opening (70) and said tank (15).

3. The battery assembly according to claim 1 or 2, **characterized by** the fact that said second opening (70) is directly fluidly connected to said tank (15).

4. The battery assembly according to any one of the foregoing claims, **characterized by** the fact that said heat exchanger (14) is housed inside said tank (15).

5. The battery assembly according to any one of the foregoing claims, **characterized by** the fact that said tank (15) is arranged inside said inner volume (12a, 12b) and comprises a third opening (74) adapted to allow, in use, the air dehumidified, in use, by said heat exchanger (14) to flow out of said tank (15) into said inner volume (12a, 12b) .

6. The battery assembly according to any one of claims 2 to 5, **characterized by** comprising:
- first pressure sensor means (81) adapted to detect a first pressure (pᵢₙ) of the air contained in said inner volume (12a, 12b);
- second pressure sensor means (82) adapted to detect a second pressure (pₒᵤₜ) of the atmospheric air external to said inner volume (12a, 12b); and
- an electronic control unit (80) operatively connected to said first and second pressure sensor means (81, 82) and said first and second valve means (73, 72);
said electronic control unit (80) being programmed to:
- receive a first signal relating to said first pressure (pᵢₙ) from said first pressure sensor means (81) and receive a second signal relating to said second pressure (pₒᵤₜ) from said second pressure sensor means (82);
- command said first valve means (73) to allow said condensed water to flow out of said inner volume (12a, 12b) when said first pressure (pᵢₙ) is, in use, greater than said second pressure (pₒᵤₜ);
- command said second valve means (72) to allow atmospheric air external to said inner volume (12a, 12b) to enter said inner volume (12a, 12b) when said first pressure (pᵢₙ) is, in use, smaller than said second pressure (pₒᵤₜ).

7. The battery assembly according to any one of the foregoing claims, **characterized by** comprising a second pump (17) adapted to suck the condensed water collected in said inner volume (12a, 12b) and outside said tank (15).

8. The battery assembly according to any one of the foregoing claims, **characterized by** comprising a fan (60) adapted to increase the kinetic energy of the air contained, in use, in said inner volume (12a, 12b).

9. The battery assembly according to any one of the foregoing claims, **characterized by** comprising one or more power electronic devices.

10. The battery assembly according to any one of the foregoing claims, **characterized by** comprising thermal insulation means (90) adapted to limit the transfer of heat between said inner volume (12a, 12b) and said case (11).

11. The battery assembly according to claim 10, wherein said thermal insulation means (90) are placed in direct contact with said case (11) and/or interposed between at least some of the said batteries (13) within said inner volume (12a, 12b).

12. A motor vehicle (1) comprising a battery assembly (10; 10') according to any one of the foregoing claims.

13. The motor vehicle according to claim 12, comprising a cooling system (50) adapted to limit the temperature of said batteries (13); said heat exchanger (14) being an evaporator of said cooling system (50).

14. The motor vehicle according to claim 13, **characterized by** comprising an HVAC system for the heating, ventilation, and air conditioning of said motor vehicle; said HVAC system comprising, in turn, said cooling system (50) .

15. The motor vehicle according to claims 13 or 14, **characterized by** the fact that said case (11) of said battery assembly (10; 10') comprises a bottom surface (32), which is inclined relative to the gravity acceleration vector (g) when said motor vehicle (1) is, in use, in a normal operating position.
